# EUROPÄISCHE PATENTANMELDUNG

(11) **EP 2 415 566 A1**
(43) Veröffentlichungstag der Anmeldung: **08.02.2012**
(21) Anmeldenummer: 11186171.2
(22) Anmeldetag: 01.10.2008
(51) Int. Cl.: B25F 5/00, B25F 5/02, F16F 9/53, B25D 17/04, F16F 7/116

(54) **Zusatzhandgriffvorrichtung**

(30) Priorität: 01.10.2007 DE 102007047076
(62) Teilanmeldung aus: 08836999.6
(71) Anmelder: Robert Bosch GmbH, 70442 Stuttgart (DE)
(72) Erfinder: Eicher, Roswitha, 70794 Filderstadt (DE); Eicher, Bernhard, 70794 Filderstadt (DE); Heess, Stefan, 70771 Leinfelden-Echterdingen (DE); Maute, Joerg, 71069 Sindelfingen (DE); Esenwein, Florian, 73066 Uhingen-Holzhausen (DE); Schuller, Marcus, 72135 Dettenhausen (DE)

(57) **Zusammenfassung**

Die Erfindung geht aus von einer Zusatzhandgriffvorrichtung, insbesondere für eine Handwerkzeugmaschine (12), mit einem Zusatzhandgriff (14) und einer Dämpfungsvorrichtung (16), die eine Gegenschwingungseinheit (18) mit zumindest einem Gegenschwingungselement (20) aufweist. Die Gegenschwingungseinheit (18) eine Anregungseinheit (22) aufweist, die zu einer Anregung des Gegenschwingungselements (20) zu einer Gegenschwingung vorgesehen ist, wobei die Dämpfungsvorrichtung (16) eine rheologische Dämpfungseinheit (50) aufweist.

## Beschreibung

### Stand der Technik

Die Erfindung geht aus von einer Zusatzhandgriffvorrichtung nach dem Oberbegriff des Anspruchs 1.

Es ist bereits eine Zusatzhandgriffvorrichtung für eine Handwerkzeugmaschine bekannt. Die Zusatzhandgriffvorrichtung umfasst einen Zusatzhandgriff und eine Dämpfungsvorrichtung. Die Dämpfungsvorrichtung weist eine Gegenschwingungseinheit mit zumindest einem Gegenschwingungselement auf.

### Vorteile der Erfindung

Die Erfindung geht aus von einer Zusatzhandgriffvorrichtung, insbesondere für eine Handwerkzeugmaschine, mit einem Zusatzhandgriff und einer Dämpfungsvorrichtung, die eine Gegenschwingungseinheit mit zumindest einem Gegenschwingungselement aufweist.

Es wird vorgeschlagen, dass die Gegenschwingungseinheit eine Anregungseinheit aufweist, die zu einer Anregung des Gegenschwingungselements zu einer Gegenschwingung vorgesehen ist. In diesem Zusammenhang soll unter einem "Zusatzhandgriff" ein Bereich und/oder ein Bauteil und/oder ein Element verstanden werden, der bzw. das zu einem Anlegen, insbesondere einem Umgreifen, durch eine Hand oder mehrere Hände eines Bedieners, zwecks einer Führung einer Handwerkzeugmaschine mittels der Zusatzhandgriffvorrichtung, vorgesehen ist und insbesondere neben einem weiteren Handgriff, insbesondere dem Haupthandgriff, zusätzlich an der Handwerkzeugmaschine anbringbar ist, wobei die Zusatzhandgriffvorrichtung seitlich an der Handwerkzeugmaschine angeordnet ist und/oder werkzeuglos von einem Bediener an der Handwerkzeugmaschine montiert bzw. demontiert werden kann und/oder in einem vorderen, werkzeugnahen Bereich der Handwerkzeugmaschine angeordnet ist und/oder der Zusatzhandgriff stabförmig ausgebildet ist. Unter "vorgesehen" soll insbesondere speziell ausgestattet und/oder ausgelegt verstanden werden. Vorteilhafterweise wird das Gegenschwingungselement mittels der Anregungseinheit zu einer Gegenschwingung angeregt, die im Betrieb einer Schwingung der Handwerkzeugmaschine entgegenwirkt. Zudem ist das Gegenschwingungselement vorzugsweise von einem Tilgermassenelement gebildet, wobei unter einem "Tilgermassenelement" insbesondere ein Element verstanden werden soll, das zumindest innerhalb eines vorgesehenen Frequenzbereichs einer Ausgangsschwingung zu einer Gegenschwingung angeregt wird, die der Ausgangsschwingung zumindest teilweise entgegenwirkt und somit zu einer Reduzierung von Schwingungen beiträgt. Durch die erfindungsgemäße Ausgestaltung kann eine vorteilhafte Dämpfung, vorzugsweise an ein Schwingungsverhalten der Handwerkzeugmaschine angepasste Variation einer Dämpfungseigenschaft, des Zusatzhandgriffs, insbesondere eines Griffbereichs, und damit ein hoher Bedienkomfort für einen Bediener erreicht werden. Die erfindungsgemäße Zusatzhandgriffvorrichtung ist grundsätzlich in Verbindung mit allen, dem Fachmann als sinnvoll erscheinenden Handwerkzeugmaschinen einsetzbar, bei denen insbesondere eine Führung von Handwerkzeugmaschinen mittels des Zusatzhandgriffs für einen Bediener erleichtert wird. Aufgrund ihrer Dämpfungseigenschaft ist die Zusatzhandgriffvorrichtung in Verbindung mit einer Winkelschleifmaschine besonders vorteilhaft.

Des Weiteren wird vorgeschlagen, dass die Anregungseinheit zur Anregung des Gegenschwingungselements zur Gegenschwingung in eine axiale Richtung vorgesehen ist, wodurch eine Gegenschwingung entlang einer Vorzugsrichtung einer Schwingungsübertragung von der Handwerkzeugmaschine auf die Zusatzhandgriffvorrichtung vorteilhaft erreicht und damit eine effektive Schwingungsdämpfung erzielt werden kann. Dabei soll unter einer "axialen Richtung" eine Richtung verstanden werden, die sich vorzugsweise entlang einer Längserstreckung, insbesondere einer Länge, der Zusatzhandgriffvorrichtung erstreckt.

Vorteilhafterweise weist die Anregungseinheit zumindest ein Sensorelement auf, das zu einer Erfassung zumindest einer Schwingungskenngröße der Handwerkzeugmaschine vorgesehen ist. Hierdurch kann mittels der erfassten Schwingungskenngröße eine vorteilhafte Anpassung eines Schwingungsparameters und/oder eines Dämpfungsparameters der Gegenschwingung des Gegenschwingungselements an ein momentanes Schwingungsverhalten der Handwerkzeugmaschine erreicht werden.

Eine besonders exakte Sensierung der Schwingungskenngröße der Handwerkzeugmaschine, insbesondere in einem der Handwerkzeugmaschine zugewandten Bereich der Zusatzhandgriffvorrichtung, kann erreicht werden, wenn die Zusatzhandgriffvorrichtung zumindest ein Befestigungselement aufweist, das zu einer Befestigung mit der Handwerkzeugmaschine vorgesehen ist, wobei an dem Befestigungselement das Sensorelement angeordnet ist.

Ferner wird vorgeschlagen, dass die Anregungseinheit zumindest ein Einstellelement aufweist, das zu einer Einstellung einer Anregungskenngröße für das Gegenschwingungselement vorgesehen ist, wodurch eine effektive und insbesondere zumindest teilweise automatische Einstellung bzw. Anpassung der Anregungskenngröße des Gegenschwingungselements an eine momentane Schwingungskenngröße der Handwerkzeugmaschine erreicht werden kann.

Ist das Einstellelement zumindest teilweise von einer Magnetspule gebildet, kann konstruktiv einfach die Anregungskenngröße mittels einer magnetischen Kraft eingestellt werden. Eine insbesondere konstruktiv einfache Einstellung einer Gegenschwingung des Gegenschwingungselements kann erreicht werden, wenn zusätzlich das Gegenschwingungselement zumindest teilweise von einem Dauermagneten gebildet ist. Eine Änderung der Anregungskenngröße kann damit besonders schnell erreicht werden.

Weiterhin wird vorgeschlagen, dass die Gegenschwingungseinheit zumindest ein Dämpfungsmittel aufweist, das zu einer Dämpfung einer Gegenschwingung des Gegenschwingungselements vorgesehen ist, wodurch ein vorteilhafter Schutz des Gegenschwingungselements und/oder weiteren Bauteilen der Gegenschwingungseinheit vor einer möglichen Überbeanspruchung erreicht und damit insbesondere eine hohe Lebensdauer des Gegenschwingungselements und/oder der Gegenschwingungseinheit erzielt werden kann. Besonders vorteilhaft kann dies erreicht werden, wenn das Dämpfungsmittel von einem Federelement, insbesondere einem Elastomer und/oder besonders vorteilhaft von einer Schraubenfeder und/oder weiteren, dem Fachmann als sinnvoll erscheinenden Federelementen gebildet ist und/oder das Dämpfungsmittel von einer Dämpfungsflüssigkeit gebildet ist. Die Dämpfungsflüssigkeit ist vorteilhafterweise von einer reinen Flüssigkeit, von einer Suspension und/oder weiteren, dem Fachmann als sinnvoll erscheinenden Dämpfungsflüssigkeiten gebildet.

In einer vorteilhaften Weiterbildung der Erfindung wird vorgeschlagen, dass die Dämpfungsvorrichtung zumindest eine rheologische Dämpfungseinheit aufweist. In diesem Zusammenhang soll unter einer "rheologischen Dämpfungseinheit" insbesondere eine Dämpfungseinheit verstanden werden, die zumindest ein rheologisches Element aufweist, das vorzugsweise zu einer Schwingungsdämpfung vorgesehen ist. In diesem Zusammenhang soll unter einem "rheologischen Element" insbesondere ein Element verstanden werden, bei dem mittels eines Einwirkens von beispielsweise äußeren Kräften, wie insbesondere eine Scherkraft, ein Anlegen eines elektrischen Feldes und/oder eines magnetischen Feldes usw., eine unmittelbare Änderung einer inneren Struktur des Elements bzw. eine Änderung einer Wechselwirkung von Elementpartikeln untereinander erzielt werden kann. Die Änderung der inneren Struktur des rheologischen Elements bewirkt dabei vorzugsweise eine Änderung eines Fließverhaltens, wie insbesondere eine Änderung einer Viskosität, und beeinflusst damit eine Dämpfungskraft. Das Einwirken der äußeren Kräfte kann dabei manuell von einem Bediener gesteuert werden oder besonders vorteilhaft zumindest teilautomatisch über eine Steuer- oder Regeleinheit eingestellt werden. Durch die erfindungemäße Ausgestaltung kann besonders schnell eine Dämpfungseigenschaft der rheologischen Dämpfungseinheit variiert werden und damit eine vorteilhafte, an ein Schwingungsverhalten der Handwerkzeugmaschine angepasste Schwingungsdämpfung erzielt werden.

Des Weiteren wird vorgeschlagen, dass die rheologische Dämpfungseinheit zumindest ein rheologisches Dämpfungsmittel aufweist, wodurch besonders schnell und effektiv eine Dämpfungseigenschaft des Dämpfungsmittels beeinflusst bzw. geändert werden kann. Zusätzlich kann die Dämpfungseigenschaft des rheologischen Dämpfungsmittels vorteilhafterweise innerhalb eines Kennfelds parametrisierbar und somit innerhalb eines weiten Bereichs in seiner Dämpfungseigenschaft variiert werden. Eine Änderung eines Dämpfungsparameters kann hierbei bis zu 1000 Mal pro Sekunde erfolgen. Vorzugsweise ist das rheologische Dämpfungsmittel zumindest teilweise von einer magnetorheologischen Dämpfungsflüssigkeit gebildet, wie beispielsweise von einer Suspension, insbesondere von einem Öl mit darin enthaltenen Polyurethanmolekülen. Grundsätzlich sind jedoch auch weitere, dem Fachmann als sinnvoll erscheinende Materialien, wie beispielsweise ein Gel usw. in einer alternativen Ausgestaltung der Erfindung jederzeit denkbar.

Ferner wird vorgeschlagen, dass die rheologische Dämpfungseinheit eine Einstelleinheit aufweist, die zu einer Einstellung eines Dämpfungsparameters des rheologischen Dämpfungsmittels vorgesehen ist, wodurch eine effektive und insbesondere zumindest teilweise automatische Einstellung bzw. Anpassung der Dämpfungskenngröße der Dämpfungseinheit, insbesondere der magnetorheologischen Dämpfungsflüssigkeit, an eine Schwingungskenngröße erreicht werden kann.

Eine besonders schnelle Anpassung bzw. Einstellung der Dämpfungskenngröße an ein aktuelles Schwingungsverhalten der Handwerkzeugmaschine kann erreicht werden, wenn die Einstelleinheit zumindest ein Sensorelement aufweist, das zu einer Erfassung einer Schwingungskenngröße der Handwerkzeugmaschine vorgesehen ist.

In einer vorteilhaften Weiterbildung der Erfindung wird vorgeschlagen, dass die Dämpfungseinheit zumindest ein Schwingungselement aufweist, wodurch vorteilhaft eine schwingungsdämpfende Schwingungsbewegung, insbesondere eine Gegenschwingung zu einer Ausgangsschwingung der Handwerkzeugmaschine, erzielt werden kann.

Ist zudem das Schwingungselement zumindest teilweise in dem rheologischen Dämpfungsmittel gelagert, kann vorteilhaft ein Schwingungsparameter des Schwingungselements durch eine Änderung eines Parameters des rheologischen Dämpfungsmittels konstruktiv einfach erzielt werden.

Vorzugsweise ist das Schwingungselement zumindest teilweise einstückig mit dem Gegenschwingungselement ausgebildet, wodurch weitere Bauteile, Bauraum, Montageaufwand und Kosten vorteilhaft eingespart werden können. Zudem kann eine Schwingungsbewegung des Gegenschwingungselements vorteilhaft auf das Schwingungselement übertragen werden.

Es wird ferner vorgeschlagen, dass die rheologische Dämpfungseinheit zumindest ein Magnetisierungselement aufweist, wodurch vorteilhaft ein Magnetfeld in dem rheologischen Dämpfungsmittel erzeugt werden kann. Dabei soll unter einem "Magnetisierungselement" insbesondere ein Element verstanden werden, das zu einer Erzeugung eines magnetischen Feldes innerhalb des magnetorheologischen Dämpfungsmittels vorgesehen ist. Eine Erzeugung eines vorzugsweise gleichmäßigen Magnetfelds kann erreicht werden, wenn das Magnetisierungselement zumindest teilweise von einer Magnetspule gebildet ist.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Handwerkzeugmaschine mit einer erfindungsgemäßen Zusatzhandgriffvorrichtung in einer schematischen Darstellung und
- Fig. 2: die Zusatzhandgriffvorrichtung mit einer Dämpfungseinheit in einer schematischen Schnittdarstellung.

### Beschreibung des Ausführungsbeispiels

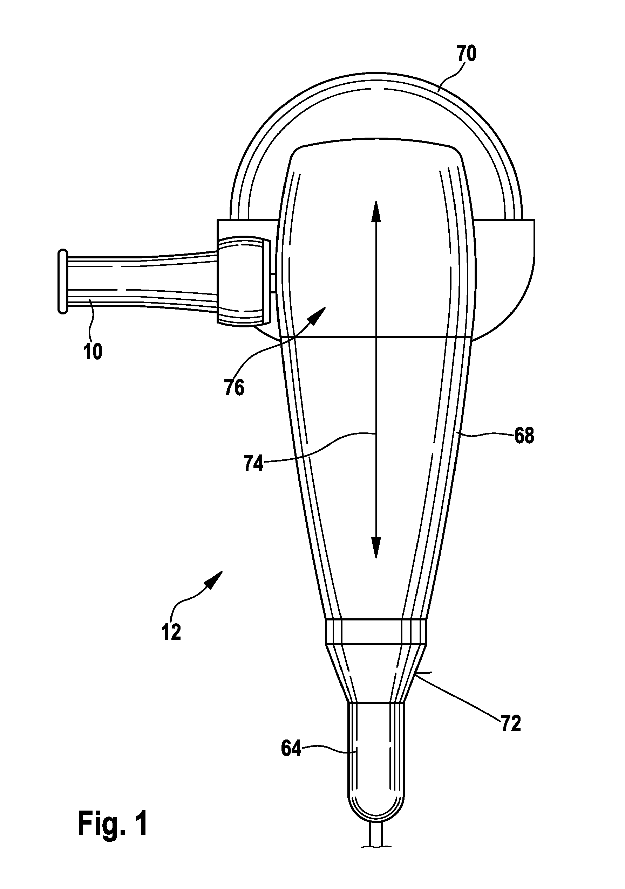

In Figur 1 ist eine von einer Winkelschleifmaschine ausgebildete Handwerkzeugmaschine 12 in einer Ansicht von oben dargestellt. Die Winkelschleifmaschine umfasst ein Gehäuse 68 und einen im Gehäuse 68 integrierten Haupthandgriff 64. Der Haupthandgriff 64 erstreckt sich an einer einem von einer Trennscheibe gebildeten Werkzeug 70 abgewandten Seite 72 in Richtung einer Längsrichtung 74 der Winkelschleifmaschine. An einem vorderen, werkzeugnahen Bereich 76 der Winkelschleifmaschine ist eine Zusatzhandgriffvorrichtung 10 angeordnet, die sich quer zur Längsrichtung 74 der Winkelschleifmaschine erstreckt.

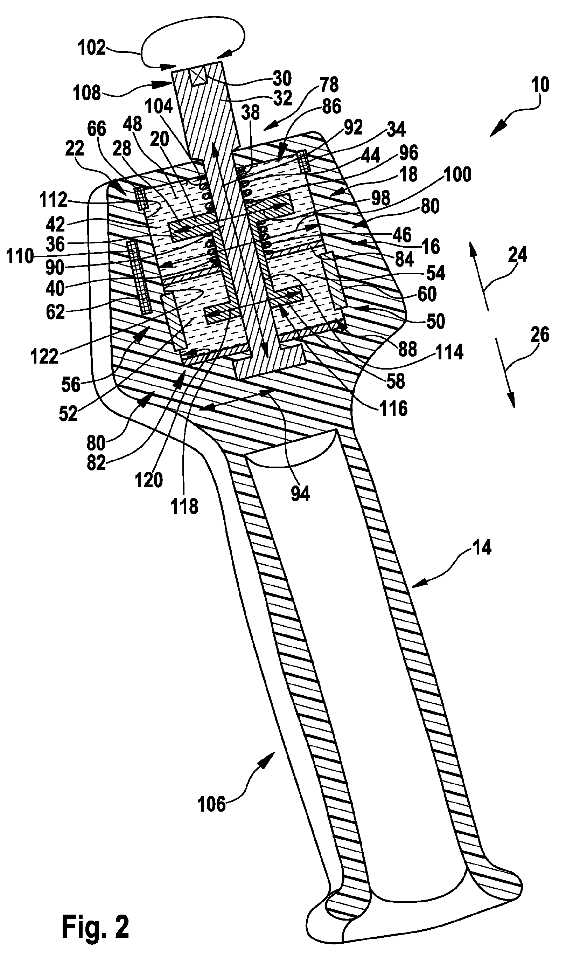

In Figur 2 ist die Zusatzhandgriffvorrichtung 10 schematisch dargestellt. Die Zusatzhandgriffvorrichtung 10 weist einen Zusatzhandgriff 14, eine Dämpfungsvorrichtung 16 und eine Befestigungseinheit 78 zu einer Befestigung mit der Handwerkzeugmaschine 12 auf. Die Dämpfungsvorrichtung 16 weist eine Gegenschwingungseinheit 18 und eine rheologische Dämpfungseinheit 50 auf, die im Betrieb zu einer Schwingungsdämpfung von Schwingungen vorgesehen sind, wobei die Schwingungen von der Handwerkzeugmaschine 12 über die Befestigungseinheit 78 auf die Zusatzhandgriffvorrichtung 10 übertragen werden. Die Dämpfungsvorrichtung 16 ist in einem Griffendbereich 80 des Zusatzhandgriffs 14 angeordnet, wobei der Griffendbereich 80 entlang einer axialen Richtung 24, 26 der Zusatzhandgriffvorrichtung 10 der Befestigungseinheit 78 zugewandt ist. Zur Anordnung der Dämpfungsvorrichtung 16 weist der Griffendbereich 80 einen zylinderförmigen Aufnahmebereich 82 auf. Entlang der axialen Richtung 24, 26 sind die Gegenschwingungseinheit 18 und die rheologische Dämpfungseinheit 50 nacheinander angeordnet, wobei von dem Zuatzhandgriff 14 aus betrachtet in Richtung der Befestigungseinheit 78 die rheologische Dämpfungseinheit 50 vor der Gegenschwingungseinheit 18 angeordnet ist. Zudem ist der zylinderförmige Aufnahmebereich 82 mittels einer Trennwand 84, die sich quer zur axialen Richtung 24, 26 erstreckt, in einen ersten, zur Aufnahme der Gegenschwingungseinheit 18 vorgesehenen Teilbereich 86 und in einen zweiten, zur Aufnahme der rheologischen Dämpfungseinheit 50 vorgesehenen Teilbereich 88 unterteilt.

Die Gegenschwingungseinheit 18 weist eine Anregungseinheit 22 und ein Gegenschwingungselement 20 auf, das von einem Tilgermassenelement 28 gebildet ist. Die Anregungseinheit 22 ist zu einer Anregung des Tilgermassenelements 28 zu einer Gegenschwingung, die einer im Betrieb der Handwerkzeugmaschine 12 erzeugten Schwingung entgegenwirkt, vorgesehen. Dabei ist das Tilgermassenelement 28 zu einer Gegenschwingung in axialer Richtung 24, 26 des Zusatzhandgriffs 14 vorgesehen. Hierzu ist das Tilgermassenelement 28 in axialer Richtung 24, 26 beweglich um ein bolzenförmiges Lagerelement 90 gelagert, wie dies durch Pfeile in Figur 2 angedeutet ist. Das Lagerelement 90 weist eine Haupterstreckungsrichtung 92 in axialer Richtung 24, 26 auf und ist einstückig mit einem Befestigungselement 32 der Befestigungseinheit 78 ausgebildet. Zudem ist das Lagerelement 90 in eine radiale Richtung 94 nach innen in einem mittleren Bereich des zylinderförmigen Aufnahmebereichs 82 angeordnet. Das Tilgermassenelement 28 weist in radialer Richtung 94 nach innen eine mittig angeordnete Ausnehmung 96 auf, durch die sich das bolzenförmige Lagerelement 90 erstreckt. Das Tilgermassenelement 28 ist scheibenförmig ausgebildet, wobei in radialer Richtung 94 eine Erstreckung 98 des scheibenförmigen Tilgermassenelements 28 kleiner ist als eine Erstreckung 100 des zylinderförmigen Aufnahmebereichs 82 bzw. des ersten Teilbereichs 86.

Des Weiteren weist die Gegenschwingungseinheit 18 drei Dämpfungsmittel 38, 40, 42 auf, die zu einer Dämpfung einer Gegenschwingung des Tilgermassenelements 28 vorgesehen sind. Eines der Dämpfungsmittel 42 ist von einer Dämpfungsflüssigkeit 48 gebildet, das einen das Tilgermassenelement 28 umgebenden Bereich des ersten Teilbereichs 86 ausfüllt. Die weiteren zwei Dämpfungsmittel 38, 40 sind jeweils von einem von einer Schraubenfeder gebildeten Federelement 44, 46 gebildet, die in eine Umfangsrichtung 102 um das bolzenförmige Lagerelement 90 angeordnet sind. Zudem sind die beiden Federelemente 44, 46 entlang der axialen Richtung 24, 26 an unterschiedlichen Seiten des Tilgermassenelements 28 zwischen dem Tilgermassenelement 28 und jeweils einer den ersten Teilbereich 86 in axialer Richtung 24, 26 begrenzenden Wandung 104 bzw. der Trennwand 84 angeordnet.

Die Anregungseinheit 22 weist zu einer Erfassung einer Schwingungskenngröße der Handwerkzeugmaschine 12 ein Sensorelement 30 auf. Um eine möglichst exakte Erfassung der Schwingungskenngröße zu erreichen, ist das Sensorelement 30 an dem Befestigungselement 32 angeordnet, und zwar in dem Zusatzhandgriff 14, insbesondere einem Griffbereich 106 abgewandten Endbereich 108 des Befestigungselements 32. Die Anregungseinheit 22 weist zudem eine Recheneinheit 110 auf, die die von dem Sensorelement 30 erfasste Schwingungskenngröße auswertet und eine daraus resultierende Anregungskenngröße zur aktiven Anregung des Tilgermassenelements 28 zur Gegenschwingung ermittelt. Zur Einstellung der Anregungskenngröße weist die Anregungseinheit 22 ein Einstellelement 34 auf. Das Einstellelement 34 ist von einer Magnetspule 66 gebildet und in einem dem Befestigungselement 32 zugewandten Endbereich des Aufnahmebereichs 82 bzw. des ersten Teilbereichs 86 angeordnet. Ferner ist die Magnetspule 66 in Umfangsrichtung 102 an einer radial nach innen gerichteten Wandung 112 des ersten Teilbereichs 86 angeordnet. Mittels einer Fließrichtung eines Stroms durch die Magnetspule 66 kann somit eine Ausrichtung eines von der Magnetspule 66 erzeugten Magnetfelds innerhalb des ersten Teilbereichs 86 geändert werden. Das Tilgermassenelement 28 ist von einem Dauermagneten 36 gebildet, so dass mittels der Magnetspule 66 eine anziehend oder eine abstoßend wirkende, magnetische Kraft auf das Tilgermassenelement 28 ausgeübt wird, die eine Bewegung des Tilgermassenelements 28 in axialer Richtung 24, 26 bewirkt.

Die rheologische Dämpfungseinheit 50 weist ein rheologisches, von einer magnetorheologischen Dämpfungsflüssigkeit 54 gebildetes Dämpfungsmittel 52 auf. Die magnetorheologische Dämpfungsflüssigkeit 54 ist in dem der Befestigungseinheit 78 abgewandten, zweiten Teilbereich 88 des Aufnahmebereichs 82 angeordnet. Um einen Austausch der Dämpfungsflüssigkeiten 48, 54 zwischen den beiden Teilbereichen 86, 88 zu verhindern, ist die Trennwand 84 flüssigkeitsisolierend ausgebildet. Zudem ist die Trennwand 84 isolierend gegenüber Magnetfeldern, die in den beiden Teilbereichen 86, 88 im Betrieb der Handwerkzeugmaschine 12 erzeugt werden, ausgebildet. Die rheologische Dämpfungseinheit 50 weist eine Einstelleinheit 56 zu einer Einstellung eines Dämpfungsparameters der magnetorheologischen Dämpfungsflüssigkeit 54 und ein Schwingungselement 58 auf, das innerhalb der magnetorheologischen Dämpfungsflüssigkeit 54 gelagert ist. Zudem ist das Schwingungselement 58 einstückig mit dem Tilgermassenelement 28 der Gegenschwingungseinheit 18 ausgebildet. Hierzu ist an dem Tilgermassenelement 28 eine Hülse 114 angeordnet, die sich in axialer Richtung 26 von dem Tilgermassenelement 28 in eine dem Befestigungselement 32 abgewandte Richtung erstreckt und in Umfangsrichtung 102 um das Lagerelement 90 angeordnet ist. Die Trennwand 84 weist hierzu in einem mittleren Bereich in radialer Richtung 94 eine Ausnehmung für die Hülse 114 und das Lagerelement 90 auf. An einem dem Befestigungselement 32 abgewandten Endbereich 116 der Hülse 114 ist das Schwingungselement 58 angeordnet, das sich scheibenförmig und quer zur axialen Richtung 24, 26 erstreckt. Das Schwingungselement 58 weist in radialer Richtung 94 eine Erstreckung 118 auf, die kleiner ist als die Erstreckung 100 des Aufnahmebereichs 82. Das Schwingungselement 58 wird somit zusammen mit dem Tilgermassenelement 28 im Betrieb zu einer Gegenschwingung angeregt.

Die Einstelleinheit 56 der rheologischen Dämpfungseinheit 50 ist teilweise einstückig mit der Anregungseinheit 22 der Gegenschwingungseinheit 18 ausgebildet und weist die Recheneinheit 110 und das Sensorelement 30 auf. Ein Austausch der Kenngrößen und/oder von Dämpfungsdaten innerhalb der Anregungseinheit 22 bzw. der Einstelleinheit 56 erfolgt dabei über eine nicht näher dargestellte Datenleitung. Eine Energieversorgung der Anregungseinheit 22 bzw. der Einstelleinheit 56 mit elektrischer Energie erfolgt durch die Handwerkzeugmaschine 12 mittels einer nicht näher dargestellten elektrischen Leitung. Grundsätzlich ist es auch denkbar, dass die Zusatzhandgriffvorrichtung 10 über eine eigene Energieversorgung, wie beispielsweise über eine Batterie, verfügt.

Zudem weist die rheologische Dämpfungseinheit 50 ein von einer Magnetspule 62 gebildetes Magnetisierungsmittel 60 auf. Die Magnetspule 62 ist in radialer Richtung 94 nach außen in einem Randbereich 120 an einer Wandung 122 des zweiten Teilbereichs 88 bzw. an dem Griffendbereich 80 angeordnet, so dass die Magnetspule 66 die magnetorheologische Dämpfungsflüssigkeit 54 in radialer Richtung 94 umgibt. Mittels der Recheneinheit 110 wird anhand einer erfassten Schwingungskenngröße eine Dämpfungskenngröße ermittelt, wie beispielsweise anhand einer gespeicherten Kennlinie, wobei die Kennlinie innerhalb eines nicht dargestellten Speichers der Einstelleinheit 56 gespeichert ist. Durch die Einstelleinheit 56 wird mittels der ermittelten Dämpfungskenngröße ein Magnetfeld in der Magnetspule 66 erzeugt und/oder geändert und damit das Magnetfeld bzw. eine magnetische Kraft innerhalb der magnetotheologischen Dämpfungsflüssigkeit 54 erzeugt und/oder geändert. Eine Änderung des Magnetfelds kann beispielsweise durch eine Änderung eines durch die Magnetspule 66 fließenden Stroms bewirkt werden. Zudem bewirkt eine Änderung des Magnetfelds in der magnetorheologischen Dämpfungsflüssigkeit 54 eine Änderung ihres Fließverhaltens bzw. ihrer Viskosität, indem beispielsweise magnetisierbare Partikel der magnetorheologischen Dämpfungsflüssigkeit 54 ihre Ausrichtung ändern.

Im Betrieb der Handwerkzeugmaschine 12 werden Schwingungen erzeugt, die über die Befestigungseinheit 78 auf die Zusatzhandgriffvorrichtung 10 übertragen werden. Die Dämpfungsvorrichtung 16 ist entlang eines Wegs einer Schwingungsausbreitung innerhalb der Zusatzhandgriffvorrichtung 10 dem Zusatzhandgriff 14, insbesondere dessen Griffbereich 106, vorgeschaltet, so dass der Griffbereich 106 des Zusatzhandgriffs 14 möglichst schwingungsentkoppelt gegenüber der Handwerkzeugmaschine 12 im Betrieb ist. Mittels des Sensorelements 30 wird im Betrieb der Handwerkzeugmaschine 12 eine Schwingungskenngröße einer aktuellen Schwingung erfasst und daraus von der Recheneinheit 110 eine einzustellende Anregungskenngröße einer Gegenschwingung der Gegenschwingungseinheit 18 bzw. eine einzustellende Dämpfungskenngröße der magnetorheologischen Dämpfungsflüssigkeit 54 ermittelt. Eine Schwingungsdämpfung der Gegenschwingungseinheit 18 bzw. der rheologischen Dämpfungseinheit 50 erfolgt dabei nach einem Prinzip eines Stoßdämpfers. Durch eine Schwingungsbewegung des Tilgermassenelements 28 bzw. des Schwingungselements 58 wird die Dämpfungsflüssigkeit 48 der Gegenschwingungseinheit 18 bzw. die magnetorheologische Dämpfungsflüssigkeit 54 der rheologischen Dämpfungseinheit 50 in einer Bewegungsrichtung des Tilgermassenelements 28 bzw. des Schwingungselements 58 verdrängt und muss entgegen der Bewegungsrichtung des Tilgermassenelements 28 bzw. des Schwingungselements 58 an diesem vorbeiströmen und trägt somit zu einer weiteren Schwingungsdämpfung bei.

## Patentansprüche

1. Zusatzhandgriffvorrichtung, insbesondere für eine Handwerkzeugmaschine (12), mit einem Zusatzhandgriff (14) und einer Dämpfungsvorrichtung (16), die eine Gegenschwingungseinheit (18) mit zumindest einem Gegenschwingungselement (20) aufweist, wobei die Gegenschwingungseinheit (18) eine Anregungseinheit (22) aufweist, die zu einer Anregung des Gegenschwingungselements (20) zu einer Gegenschwingung vorgesehen ist, **dadurch gekennzeichnet, dass** die Dämpfungsvorrichtung (16) eine rheologische Dämpfungseinheit (50) aufweist.

2. Zusatzhandgriffvorrichtung zumindest nach Anspruch 1, **dadurch gekennzeichnet, dass** die rheologische Dämpfungseinheit (50) zumindest ein rheologisches Dämpfungsmittel (52) aufweist.

3. Zusatzhandgriffvorrichtung zumindest nach Anspruch 1, **dadurch gekennzeichnet, dass** die rheologische Dämpfungseinheit (50) zumindest eine magnetorheologische Dämpfungsflüssigkeit (54) aufweist.

4. Zusatzhandgriffvorrichtung zumindest nach Anspruch 1 und 2, **dadurch gekennzeichnet, dass** die rheologische Dämpfungseinheit (50) eine Einstelleinheit (56) aufweist, die zu einer Einstellung eines Dämpfungsparameters des rheologischen Dämpfungsmittels (52) vorgesehen ist.

5. Zusatzhandgriffvorrichtung zumindest nach Anspruch 4, **dadurch gekennzeichnet, dass** die Einstelleinheit (56) zumindest ein Sensorelement (30) aufweist, das zu einer Erfassung einer Schwingungskenngröße der Handwerkzeugmaschine (12) vorgesehen ist.

6. Zusatzhandgriffvorrichtung zumindest nach Anspruch 1, **dadurch gekennzeichnet, dass** die rheologische Dämpfungseinheit (50) zumindest ein Schwingungselement (58) aufweist.

7. Zusatzhandgriffvorrichtung zumindest nach Anspruch 2 und 6, **dadurch gekennzeichnet, dass** das Schwingungselement (58) zumindest teilweise in dem rheologischen Dämpfungsmittel (52) gelagert ist.

8. Zusatzhandgriffvorrichtung zumindest nach Anspruch 6, **dadurch gekennzeichnet, dass** das Schwingungselement (58) zumindest teilweise einstückig mit dem Gegenschwingungselement (20) ausgebildet ist.

9. Zusatzhandgriffvorrichtung zumindest nach Anspruch 1, **dadurch gekennzeichnet, dass** die rheologische Dämpfungseinheit (50) zumindest ein Magnetisierungselement (60) aufweist.

10. Zusatzhandgriffvorrichtung zumindest nach Anspruch 9, **dadurch gekennzeichnet, dass** das Magnetisierungselement (60) von einer Magnetspule (62) gebildet ist.

11. Handwerkzeugmaschine, insbesondere eine Winkelschleifmaschine, mit einem Haupthandgriff (64) und einer Zusatzhandgriffvorrichtung (10) nach einem der vorhergehenden Ansprüche.
